# EUROPÄISCHE PATENTSCHRIFT

(11) **EP 3 501 254 B1**
(45) Veröffentlichungstag und Bekanntmachung des Hinweises auf die Patenterteilung: **07.10.2020**
(21) Anmeldenummer: 18213105.2
(22) Anmeldetag: 17.12.2018
(51) Int. Cl.: A01D 34/835

(54) **ERNTEVORSATZ MIT EINEM MULCHGERÄT ZUR BEARBEITUNG VON AUF EINEM FELD STEHENDEN PFLANZENSTÜMPFEN**
HARVESTING ATTACHMENT WITH A MULCHING DEVICE FOR PROCESSING PLANT STUMPS ON A FIELD
TÊTE DE RÉCOLTE DOTÉE D'UN APPAREIL DE BROYAGE DESTINÉ AU TRAITEMENT DES SOUCHES DE PLANTES SE TROUVANT DANS UN CHAMP

(30) Priorität: 19.12.2017 DE 102017223173
(43) Veröffentlichungstag der Anmeldung: 26.06.2019
(73) Patentinhaber: Deere & Company, Moline, IL 61265 (US)
(72) Erfinder: Awater, Klaus, 68163 Mannheim (DE); Effsing, Jürgen, 68163 Mannheim (DE); Messing, Marco, 68163 Mannheim (DE); Schlamann, Michael, 68163 Mannheim (DE); Weitenberg, Clemens, 68163 Mannheim (DE)
(74) Vertreter: Holst, Sönke

(56) Entgegenhaltungen:
- DE-T2- 60 313 399
- DE-U1- 8 605 056
- FR-A1- 2 794 608

## Beschreibung

Die Erfindung betrifft einen Erntevorsatz, der ein tragendes Gestell, das in einer Vorwärtsrichtung über ein Feld bewegbar ist, eine oder mehrere am Gestell angebrachte Ernteeinheiten zur Ernte stängelartiger Pflanzen und mindestens ein am Gestell angebrachtes Mulchgerät zur Zerkleinerung und/oder Zerfaserung der nach der Ernte auf dem Feld verbleibenden Pflanzenstümpfe umfasst, das mittels eines Aktors gegenüber dem Gestell zwischen einer abgesenkten Betriebsposition und einer angehobenen Außerbetriebsposition beweglich ist.

### Stand der Technik

Unterhalb von Erntevorsätzen zur Maisernte werden in vielen Fällen (auch als Stängelhäcksler bezeichnete) Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*).

Derartige Mulchgeräte werden üblicherweise um die Querachse frei schwenkbar am Rahmen des Erntevorsatzes angelenkt und stützen sich durch Kufen am Boden ab, sodass sie bodenkopierend in Bodennähe geführt werden, um die Stängel in Bodennähe zu zerkleinern (s. beispielsweise WO 2014/012620 A1), oder sie sind durch eine Parallelogrammführung mit dem Erntevorsatz verbunden und werden bei Nichtbenutzung durch einen Aktor ausgehoben (DE 603 13 399 T2) oder der Aktor wird beim Rangieren der Erntemaschine in sich blockiert und der Erntevorsatz ausgehoben (EP 3 155 888 A1).

### Aufgabe

Es sind Betriebssituationen der Erntemaschine denkbar, bei denen das Mulchgerät gefährdet ist. Hierzu zählt beispielsweise der Fall, dass die Vorderräder der Erntemaschine in feuchtem Boden einsinken. In diesem Fall dringt auch das Mulchgerät in den Boden ein. Wird die Erntemaschine anschließend aus eigener Kraft oder durch eine andere Maschine aus dem Boden gezogen, was üblicherweise in der Rückwärtsrichtung erfolgt, verhakt sich das Mulchgerät im Boden und wird verbogen.

Die vorliegende Erfindung hat sich zum Ziel gesetzt, einen gegenüber dem Stand der Technik verbesserten Erntevorsatz bereitzustellen.

### Lösung

Diese Aufgabe wird erfindungsgemäß durch die Lehre des Patentanspruchs 1 gelöst.

Ein Erntevorsatz umfasst ein tragendes Gestell, das in einer Vorwärtsrichtung über ein Feld bewegbar ist, eine oder mehrere am Gestell angebrachte Ernteeinheiten zur Ernte stängelartiger Pflanzen und mindestens ein am Gestell angebrachtes Mulchgerät zur Zerkleinerung und/oder Zerfaserung der nach der Ernte auf dem Feld verbleibenden Pflanzenstümpfe, das mittels eines Aktors gegenüber dem Gestell zwischen einer abgesenkten Betriebsposition und einer angehobenen Außerbetriebsposition beweglich ist. Rückwärtig des Mulchgeräts ist ein Schutzelement angebracht, das sich zumindest über die Breite des Mulchgeräts erstreckt, starr mit dem Gestell verbunden und in vertikaler Richtung tiefer als das in der angehobenen Außerbetriebsposition befindliche Mulchgerät angeordnet ist.

Auf diese Weise vermeidet man, dass das Mulchgerät beim Herausziehen der Erntemaschine aus feuchtem Boden beschädigt wird, denn das Schutzelement schiebt in diesem Fall die Erde vor sich her, in die sich das Mulchgerät ohne das Schutzelement eingraben würde.

### Ausführungsbeispiel

In den Zeichnungen wird ein nachfolgend näher beschriebenes Ausführungsbeispiel dargestellt. Es zeigen:
- Fig. 1: eine Seitenansicht eines Erntevorsatzes zur Maisernte,
- Fig. 2: eine vergrößerte Seitenansicht des Erntevorsatzes, und
- Fig. 3: eine perspektivische, rückwärtige Ansicht des Erntevorsatzes der Figur 1.

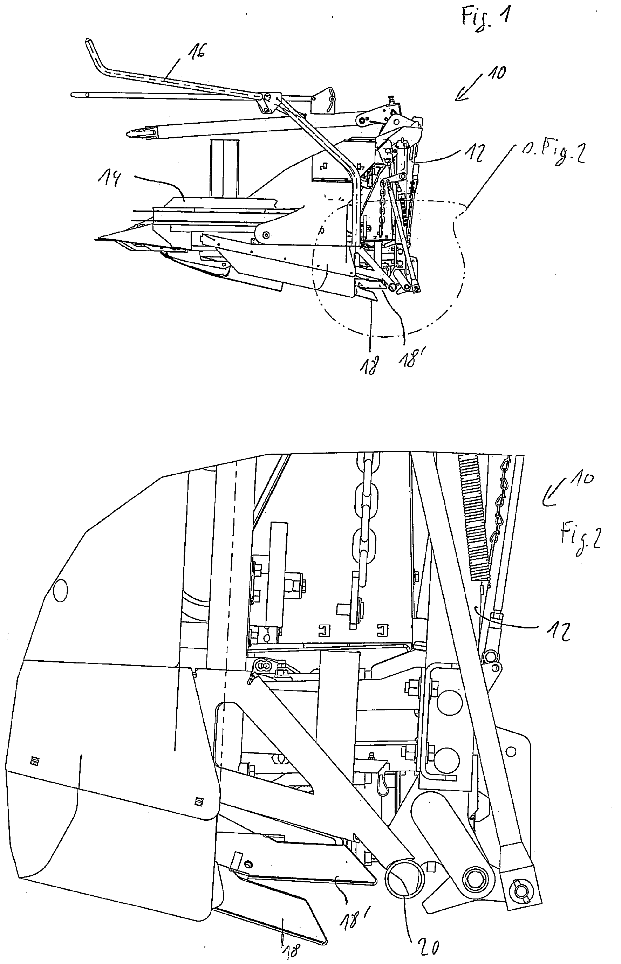

Die Figur 1 zeigt eine seitliche Ansicht eines Erntevorsatzes zur Maisernte. Er umfasst ein insbesondere als Rahmenkonstruktion ausgeführtes, tragendes Gestell 12, das an einem Einzugskanal einer Erntemaschine (Feldhäcksler) anbringbar ist und eine Anzahl an Mäh- und Einzugstrommeln 14 trägt, die zur Ernte vollständiger, stängelartiger Pflanzen (z.B. Mais) dienen. Während im Erntebetrieb, in dem der Erntevorsatz 10 in einer Vorwärtsrichtung, die in den Figuren 1 und 2 nach links verläuft, über ein Feld bewegt wird, die abgeschnittenen Pflanzen in den Einzugskanal der Erntemaschine gefördert werden, verbleiben die Pflanzenstümpfe mit ihren Wurzeln im Erdboden. Vordruckbügel 16 dienen dazu, die Pflanzen etwas nach vorn zu drücken, um sie besser abschneiden zu können. Ein ähnlicher Erntevorsatz 10 ist in der DE 103 51 858 A1 beschrieben, deren Offenbarung durch Verweis mit in die vorliegenden Unterlagen aufgenommen wird. Der Erntevorsatz 10 könnte anstelle von Mäh- und Einzugstrommeln Kettenförderer zum Abschneiden und Aufnehmen der Pflanzen aufweisen oder als Maispflücker für einen Mähdrescher ausgeführt sein.

Unterhalb des tragenden Gestells 12 sind, wie insbesondere in der Figur 2 erkennbar, eine Anzahl an Mulchgeräten 18 über die Breite des Erntevorsatzes 10 verteilt. Die Mulchgeräte sind durch einen nicht gezeigten Aktor zwischen einer abgesenkten Betriebsstellung, in der sie mit dem Bezugszeichen 18 gekennzeichnet sind, und einer angehobenen Außerbetriebsstellung, in der sie mit dem Bezugszeichen 18' gekennzeichnet sind, beweglich, d.h. an ihrem vorderen Ende am tragenden Gestell 12 um eine sich in Querrichtung (senkrecht zur Zeichenebene der Figuren 1 und 2) erstreckende Achse schwenkbar angelenkt. Mögliche Ausführungsformen der Mulchgeräte 18 sind in der DE 10 2016 213 260 A1 gezeigt und die DE 10 2017 222 587 A1 beschreibt einen geeigneten Aktor und dessen Ansteuerung genauer. Der Inhalt beider Schriften wird durch Verweis mit in die vorliegenden Unterlagen aufgenommen. Der Aktor verbringt das Mulchgerät 18' zumindest dann in die Außerbetriebsposition, wenn es nicht benötigt wird (z.B. beim Rangieren oder Rückwärtsfahren auf dem Feld oder wenn die Erntemaschine stillsteht). Der Erntevorsatz 10 umfasst eine Anzahl von insgesamt acht Mulchgeräten 18, die in seitlicher Richtung zumindest jeweils dort positioniert sind, wo an den Mäh- und Einzugstrommeln 14 jeweils erwartungsgemäß die zu erntenden Pflanzenreihen einlaufen.

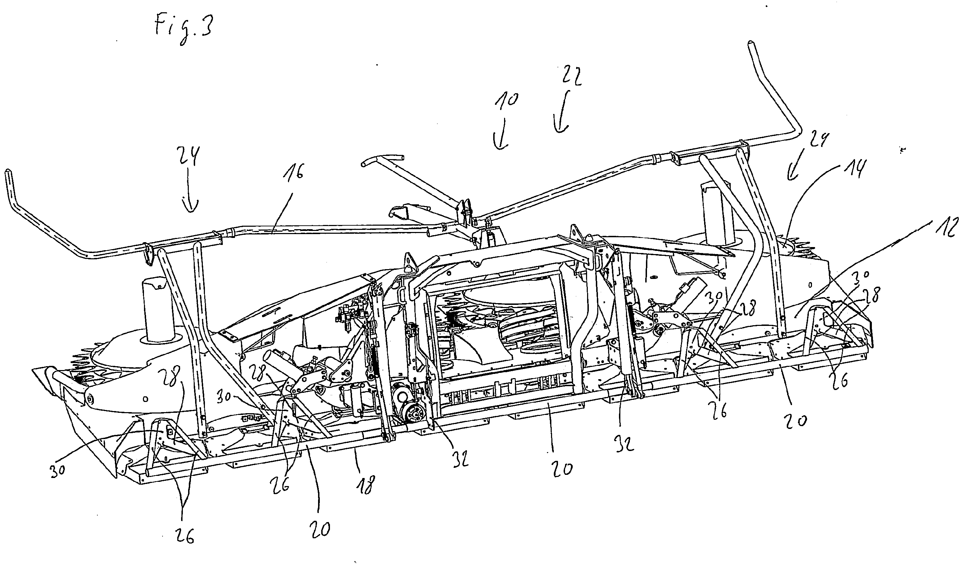

Eine Anzahl an Schutzelementen 20 ist mit einem relativ geringen Abstand von z.B. einigen cm unmittelbar rückwärtig der Mulchgeräte 18 angebracht. Die Schutzelemente 20 erstrecken sich zumindest über die Breite des ihnen jeweils vorgelagerten Mulchgeräts 18, sind starr mit dem tragenden Gestell 12 verbunden und ihre Unterkante ist in vertikaler Richtung tiefer als (oder in derselben Höhenebene wie) die Unterkante des in der angehobenen Außerbetriebsposition befindlichen Mulchgeräts 18' angeordnet. Man beachte, dass die Mulchgeräte 18 in der Figur 3 in der abgesenkten Betriebsposition gezeigt sind und daher tiefer als die Schutzelemente 20 liegen, während sie in der Außerbetriebsposition höher als die Schutzelemente 20 sind. Es sind in der dargestellten Ausführungsform insgesamt drei Schutzelemente 18 vorhanden, die sich jeweils näherungsweise über die gesamte Breite eines Mittelteils 22 bzw. eines aus der dargestellten Ernteposition in eine Straßenfahrposition anhebbaren Seitenteils 24 des Erntevorsatzes 10 erstrecken. Der Mittelteil 22 trägt zwei Mäh- und Einzugstrommeln 14 und die Außenteile 24 jeweils eine Mäh- und Einzugstrommel 14. Bei anderen Ausführungsformen kann die Anzahl und Größe der Mäh- und Einzugstrommeln 14 und auch der Mulchgeräte 18 hiervon abweichen.

Die Schutzelemente 20 sind starr mit dem tragenden Gestell 12 des Mittelteils 22 bzw. Seitenteils 24 starr verbunden. Die Schutzelemente 20 sind als Rohre ausgeführt, könnten jedoch auch massiv sein. Der Querschnitt der Schutzelemente 20 ist kreisförmig, könnte aber auch eine beliebige andere Form haben.

Zur Anbringung der Schutzelemente 20 am tragenden Gestell 12 dienen bei den Seitenteilen 24 Streben 26, die jeweils einem Ende der Schutzelementes 20 benachbart sich paarweise (zwei Kanten einer Dreieckspyramide bildend) schräg nach oben und vorn und zur Seite erstrecken und sich am tragenden Gestell 12 treffen. Unterhalb der Streben 26 sind zusätzliche Arme 28 angeordnet, die ausgehend vom rückwärtigen, unteren Ende der Strebe 26 sich paarweise schräg nach oben und vorn und zur Seite erstrecken und sich an der Rückwand des tragenden Gestells 12 treffen. Die Arme 28 können auf der Seite des Erntevorsatzes 10 durch vertikale Verbindungen 30 mit den Streben 26 gekoppelt sein. Die Streben 26, Verbindungen 30 und Arme 28 können als Profil- oder Tiefziehteile oder durch eine geschweißte Rohrkonstruktion gebildet sein. An Löchern der Verbindungen 30 kann die Anbindung an der Rückwand des tragenden Gestells 12 des Seitenteils 24 bzw. einem dort vorhandenen, tragenden Element des Gestells 12 erfolgen, wozu insbesondere Schrauben und Muttern vorgesehen werden können.

Die Anbindung des Schutzelementes 20 am Mittelteil 22 erfolgt durch angeschweißte Blechelemente 32, die Verbindungen mit geeigneten Teilen des tragenden Gestells 12 herstellen. In der Ernteposition könnte ein Formschluss zwischen dem Schutzelement 20 des Mittelteils und den Schutzelementen 20 der Außenteile 24 hergestellt werden.

Durch die Schutzelemente 20 wird in dem Fall, dass die Erntemaschine im Feld einsinken sollte und rückwärts wieder aus dem nicht tragfähigen Bereich des Feldes herausgezogen wird oder aus eigener Kraft rückwärts daraus hinaus fährt, verhindert dass die (dann bei stehender Erntemaschine durch eine Steuerung selbsttätig oder nach einer Bedienereingabe durch die Aktoren in die Außerbetriebsposition verbrachten) Mulchgeräte 18 beschädigt werden. Befindet sich das Mulchgerät 18 hingegen beim Erntebetrieb in der Betriebsposition 18, stören die Schutzelemente 20 den Betrieb nicht. Gleiches gilt, wenn die Mulchgeräte 18 beim Erntebetrieb oder bei Straßenfahrt in der Außerbetriebsposition sind.

Es sei noch angemerkt, dass in einer anderen Ausführungsform an den äußeren Enden der Seitenteile noch weitere Seitenteile angelenkt werden können, die ebenfalls mit Schutzelementen 20 ausgestattet werden können. Die Mulchgeräte 18 können, wie dargestellt, um die Querachse pendelnd angebracht sein, oder sie sind linear entlang einer Geraden oder an Parallelogrammhalterungen entlang einer Kurve höhenbeweglich. Generell benötigen alle schleppend an einem Erntevorsatz oder einem anderen Arbeitsgerät angebrachten Mulchgeräte 18 rückwärtige Schutzelemente 20, damit sie bei Rückwärtsfahrt in der angehobenen Position verbleiben.

## Patentansprüche

1. Erntevorsatz (10), umfassend ein tragendes Gestell (12), das in einer Vorwärtsrichtung über ein Feld bewegbar ist, eine oder mehrere am Gestell (12) angebrachte Ernteeinheiten zur Ernte stängelartiger Pflanzen und mindestens ein am Gestell (12) angebrachtes Mulchgerät (18) zur Zerkleinerung und/oder Zerfaserung der nach der Ernte auf dem Feld verbleibenden Pflanzenstümpfe, das mittels eines Aktors gegenüber dem Gestell (12) zwischen einer abgesenkten Betriebsposition (18) und einer angehobenen Außerbetriebsposition (18') beweglich ist, **dadurch gekennzeichnet, dass** rückwärtig des Mulchgeräts (18) ein Schutzelement (20) angebracht ist, das sich zumindest über die Breite des Mulchgeräts (18) erstreckt, starr mit dem Gestell (12) verbunden und in vertikaler Richtung tiefer als das in der angehobenen Außerbetriebsposition (18') befindliche Mulchgerät (18) angeordnet ist.

2. Erntevorsatz (10) nach Anspruch 1, wobei das tragende Gestell (12) einen Mittelteil (22) und zwei Seitenteile (24) umfasst, die aus einer Ernteposition in eine Straßentransportposition verbringbar sind und am Mittelteil (22) und an den Seitenteilen (24) jeweils eine oder mehrere Mäh- und Einzugstrommeln (14) als Ernteeinheit angebracht sind und Mulchgeräte (18) sowie Schutzelemente (20) am Mittelteil (22) und an den Seitenteilen (24) angebracht sind, die sich jeweils zumindest näherungsweise über die Breite des Mittelteils (22) bzw. Seitenteils (24) erstrecken.

3. Erntevorsatz (10) nach Anspruch 2, wobei die Schutzelemente (20) an den Seitenteilen (24) durch in der Nähe der Enden des Schutzelements (20) des Seitenteils (24) angebrachte Streben (26) befestigt sind, die sich paarweise nach vorn und oben und seitlich erstrecken und an der Rückwand des Seitenteils (24) zusammentreffen.

4. Erntevorsatz (10) nach Anspruch 2 oder 3, wobei die Schutzelemente (20) der Seitenteile (24) in der Ernteposition der Seitenteile (24) mit dem Schutzelement (20) des Mittelteils (22) formschlüssig gekoppelt sind.

## Claims

1. Harvesting header (10) comprising a load-bearing frame (12) which is movable in a forward direction over a field, one or more harvesting units attached to the frame (12) for harvesting stalk-like plants and at least one mulching device (18) which is attached to the frame (12) for comminuting and/or shredding the plant stubble remaining on the field after the harvesting and which is movable relative to the frame (12) by means of an actuator between a lowered operating position (18) and a raised non-operating position (18'), **characterized in that** a protection element (20) is attached to the rear of the mulching device (18), said protection element extending at least over the width of the mulching device (18), being rigidly connected to the frame (12) and in the vertical direction being arranged lower than the mulching device (18) which is in the raised non-operating position (18').

2. Harvesting header (10) according to Claim 1, wherein the load-bearing frame (12) comprises a central part (22) and two side parts (24), which are able to be moved from a harvesting position into a road transport position, and in each case one or more mowing and intake drums (14) are attached as a harvesting unit to the central part (22) and to the side parts (24), and mulching devices (18) and protection elements (20) are attached to the central part (22) and to the side parts (24), in each case said mulching devices extending at least approximately over the width of the central part (22) and/or side part (24).

3. Harvesting header (10) according to Claim 2, wherein the protection elements (20) are fastened to the side parts (24) by struts (26) which are attached in the vicinity of the ends of the protection element (20) of the side part (24) and which extend in pairs to the front and upwardly and to the side and come together on the rear wall of the side part (24).

4. Harvesting header (10) according to Claim 2 or 3, wherein in the harvesting position of the side parts (24) the protection elements (20) of the side parts (24) are positively coupled to the protection element (20) of the central part (22).

## Revendications

1. Tête de récolte (10), comprenant un châssis porteur (12) qui peut être déplacé sur un champ dans une direction d'avance, une ou plusieurs unités de récolte montées sur le châssis (12) pour récolter des plantes à tiges et au moins un appareil de broyage (18) monté sur le châssis (12) pour broyer et/ou défibrer les résidus de plantes qui restent dans le champ après la récolte, lequel peut être déplacé par rapport au châssis (12) au moyen d'un actionneur entre une position de fonctionnement abaissée (18) et une position hors fonctionnement relevée (18'), **caractérisée en ce qu'**en arrière de l'appareil de broyage (18) est monté un élément de protection (20) qui s'étend au moins sur la largeur de l'appareil de broyage (18), qui est relié rigidement au châssis (12) et qui est disposé dans la direction verticale plus bas que l'appareil de broyage (18) se trouvant dans la position hors fonctionnement relevée (18').

2. Tête de récolte (10) selon la revendication 1, dans laquelle le châssis porteur (12) comprend une partie centrale (22) et deux parties latérales (24) qui peuvent être amenées d'une position de récolte dans une position de transport routier et à chaque fois un ou plusieurs tambours de moisson et d'amenée (14) sont montés en tant qu'unité de récolte au niveau de la partie centrale (22) et au niveau des parties latérales (24) et des appareils de broyage (18) ainsi que des éléments de protection (20) sont montés sur la partie centrale (22) et sur les parties latérales (24), lesquels s'étendent à chaque fois au moins approximativement sur la largeur de la partie centrale (22), respectivement, de la partie latérale (24).

3. Tête de récolte (10) selon la revendication 2, dans laquelle les éléments de protection (20) sont fixés au niveau des parties latérales (24) par des montants (26) montés à proximité des extrémités de l'élément de protection (20) de la partie latérale (24), lesquels montants s'étendent par paires vers l'avant et vers le haut et latéralement et se rejoignent au niveau de la paroi arrière de la partie latérale (24).

4. Tête de récolte (10) selon la revendication 2 ou 3, dans laquelle les éléments de protection (20) des parties latérales (24), dans la position de récolte des parties latérales (24), sont accouplés par engagement par correspondance de formes à l'élément de protection (20) de la partie centrale (22).
